# EUROPEAN PATENT SPECIFICATION

(11) **EP 3 018 928 B1**
(45) Date of publication and mention of the grant of the patent: **02.01.2019**
(21) Application number: 13888871.4
(22) Date of filing: 05.07.2013
(51) Int. Cl.: H04W 24/02

(54) **PARAMETER CONFIGURING METHOD AND APPARATUS THEREOF**
PARAMETERKONFIGURATIONSVERFAHREN SOWIE VORRICHTUNG DAFÜR
PROCÉDÉ DE CONFIGURATION DE PARAMÈTRES ET APPAREIL ASSOCIÉ

(43) Date of publication of application: 11.05.2016
(73) Proprietor: Fujitsu Connected Technologies Limited, Kawasaki-shi Kanagawa 211-8588 (JP)
(72) Inventor: WU, Lianhai, Beijing 100025 (CN); LI, Zhaojun, Beijing 100025 (CN); WANG, Weiwei, Beijing 100025 (CN); XU, Haibo, Beijing 100025 (CN)
(74) Representative: Haseltine Lake LLP
(86) International application number: PCT/CN2013/078937
(87) International publication number: WO 2015/000184

(56) References cited:
- EP-A1- 2 348 771
- WO-A1-2013/066235
- CN-A- 101 841 835
- CN-A- 101 959 262
- CN-A- 102 378 205
- CN-A- 102 413 494
- US-A1- 2010 246 440
- US-A1- 2012 135 753
- US-A1- 2012 176 892
- US-A1- 2013 045 749
- SAMSUNG: "Specification impact for Mobility Robustness Optimisation", 3GPP DRAFT; R3-091192-SPECIFICATION IMPACT FOR MRO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090429, 29 April 2009 (2009-04-29), XP050341558, [retrieved on 2009-04-29]
- FUJITSU: "Discussion on scenarios for the active antenna systems", 3GPP DRAFT; R3-130598, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Chicago, USA; 20130415 - 20130419 5 April 2013 (2013-04-05), XP050700566, Retrieved from the Internet: URL:http://www.3gpp.org/ftp/tsg_ran/WG3_Iu /TSGR3_79bis/Docs/ [retrieved on 2013-04-05]
- ARIB: "Requirements and Objectives for 3G Mobile Services and System", 3GPP DRAFT; S1-99022, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Sophia; 19990201, 1 February 1999 (1999-02-01), XP050213292, [retrieved on 1999-02-01]

## Description

### Technical Field

The present invention relates to the field of communications, and in particular to a information acquiring method, parameter optimizing method and apparatuses thereof and a system.

### Background

Based on an existing third generation partnership project (3GPP) standard, one of functions of mobility robustness optimization (MRO) is to be able to detect link failure which occurs in movement, the link failure including handover too late, handover too early and handover to a wrong cell.

The handover too late refers to that handover is not performed when it should be performed, which results in that terminal equipment stays in a cell too long and radio link failure (RLF) occurs; and after connection failure occurs, the terminal equipment performs connection reestablishment in another cell.

The handover too early refers to that after terminal equipment is successfully handed over from a source cell to a target cell, RLF occurs within a very short period of time, or handover failure occurs during the handover, and thereafter, the terminal equipment performs connection reestablishment in the source cell.

The handover to a wrong cell refers to that after terminal equipment is successfully handed over from a source cell to a target cell, RLF occurs within a very short period of time, or handover failure occurs during the handover; and the terminal equipment performs connection reestablishment in another cell than the source cell and the target cell.

Currently, an MRO detection mechanism is able to differentiate the above three types of the link failure. After collecting a certain number of samples, a base station, such as an eNB, will judge whether a handover boundary between it and a target base station is set properly. And if adjustment is needed, the base station will notify, via a message (such as a mobility change request), a neighboring cell to adjust related parameters.

It should be noted that the above description of the background is merely provided for clear and complete explanation of the present invention and for easy understanding by those skilled in the art. And it should not be understood that the above technical solution is known to those skilled in the art as it is described in the background of the present invention.

SAMSUNG: "Specification impact for Mobility Robustness Optimisation", 3GPP DRAFT; R3-091192 is directed at a method for reducing "faulty" (too early, too late, to a wrong cell) handovers. Therein, when a handover failure due to "too late" handover occurs, the handover trigger time, radio link failure (RLF) time and reestablishment are reported from the user equipment (UE) to the base station which has triggered the handover procedure.

WO 2013/066235 A1 is directed at a system and method for load balancing and optimizing mobility robustness in an LTE network. Therein, RLF indication messages are sent between base stations of neighbouring cells. The RLF indication messages include PCI and ECGI information, i.e. information about the cell's identity.

US 2010/0246440 A1 discloses a wireless system wherein a base station detects respective sizes of areas served by more than one cell associated with the BS; size detection is based on parameters including cell location, path loss and transmission power; BS then assigns respective configuration parameters to the cells.

US 2012/0135753 A1 discloses a wireless network with a macro cell and plural micro cells; a micro cell transmits via X2 interface to the macro cell a number of parameters (e.g. cell id, cell location, cell type), and a terminal transmits terminal location information to the macro cell; the macro cell then selects a micro cell to be opened according to both the terminal location and the type and location of the micro cell, and instructs the selected micro cell to open.

### Summary

An existing MRO detection mechanism is only applicable to a scenario where a coverage range of a cell is relatively stable. However, in Rel. 12, introduction of an active antenna system (AAS) shall be taken into account, in which a base station equipped with the AAS may dynamically adjust parameters of an antenna group. In this way, a coverage range of a cell will dynamically change, so as to meet demands of traffics. Hence, it is possible that a detection result is inaccurate if an existing mechanism is used for detection. Therefore, there is a need to further enhance the existing MRO mechanism.

An object of embodiments of the present invention is to provide a parameter configuring method and apparatus, in which cell types corresponding to coverage ranges of cells may be configured according to dynamically adjusted parameter ranges, thereby further configuring triggering conditions corresponding to the cell types, and satisfying traffic demands when the cell ranges are dynamic.

In order to solve this object, a method according to claim 1 and an apparatus according to claim 3 are provided.

The embodiments and/or aspects of the following description which are not covered by the appended claims are considered as not being part of the present invention. According to further embodiments, an information acquiring method is provided, including:
receiving, by a first base station, information transmitted by user equipment, or a second base station, or a third base station; wherein,
the information includes relevant information used by a network side to determine cell types of the first base station and the second base station when handover initiation or link failure occurs, or includes an absolute time when handover initiation or link failure occurs in the user equipment.

According to a second aspect, an information acquiring method is provided, including:
receiving, by a second base station, information notified by user equipment, or a first base station, or a third base station; wherein the information includes relevant information used by a network side to determine cell types of the first base station and the second base station when handover initiation or link failure occurs, or includes an absolute time when handover initiation or link failure occurs in the user equipment.

According to a third aspect, an information acquiring method is provided, including:
receiving, by a third base station, information notified by user equipment; wherein the information includes relevant information used by a network side to determine cell types of a first base station and a second base station when handover initiation or link failure occurs; and
notifying the second base station or the first base station of the information.

According to a fourth aspect, a parameter optimizing method is provided, including:
notifying information containing cell types of a source cell and a target cell or containing an absolute time period indicating frequent occurrence of handover failure to a base station where a cell needing to be corrected with respect to parameters is located, by a parameter-correcting base station, in detecting that handover parameters between it and neighboring cells need to be corrected.

According to a fifth aspect, a parameter optimizing method is provided, including:
receiving information containing cell types of a source cell and a target cell or containing an absolute time period indicating frequent occurrence of handover failure transmitted by a parameter-correcting base station;
evaluating according to the information whether to correct handover parameters; and
transmitting a corresponding response message to the parameter-correcting base station when an evaluating result is to correct the handover parameters.

According to a sixth aspect, an information acquiring apparatus is provided, applicable to a first base station, including:
a first receiving unit configured to receive information transmitted by user equipment, or a second base station or a third base station; wherein,
the information includes relevant information used by a network side to determine cell types of the first base station and the second base station when handover initiation or link failure occurs, or includes an absolute time when handover initiation or link failure occurs in the user equipment.

According to a seventh aspect, an information acquiring apparatus is provided, applicable to a second base station, including:
a second receiving unit configured to receive information notified by user equipment or a first base station or a third base station; wherein the information includes relevant information used by a network side to determine cell types of the first base station and the second base station when handover initiation or link failure occurs, or includes an absolute time when handover initiation or link failure occurs in the user equipment.

According to an eighth aspect, a parameter optimizing apparatus is provided, including:
a first transmitting unit configured to notify information containing cell types of a source cell and a target cell or containing an absolute time period indicating frequent occurrence of handover failure to a base station where a cell needing to be corrected with respect to parameters is located, in detecting that handover parameters between a base station where the apparatus is located and neighboring cells need to be corrected.

According to a ninth aspect, a parameter optimizing apparatus is provided, including:
a fifth receiving unit configured to receive information containing cell types of a source cell and a target cell or containing an absolute time period indicating frequent occurrence of handover failure transmitted by a parameter-correcting base station;
a determining unit configured to evaluate according to the information whether to correct handover parameters; and
a second transmitting unit configured to transmit a corresponding response message to the parameter-correcting base station when an evaluating result of the determining unit is to correct the handover parameters.

According to a tenth aspect, a parameter configuring method is provided, including:
determining coverage ranges of cells by a base station or a network side entity according to parameter ranges of configured more than one groups of parameter sets.

According to an eleventh aspect, there is provided a parameter configuring apparatus, including:
a first parameter configuring unit configured to determine coverage ranges of cells according to parameter ranges of configured more than one groups of parameter sets.

According to a twelfth aspect, a base station is provided, including the above apparatuses.

According to a thirteenth aspect, a network system is provided, including the above base station.

According to a fourteenth aspect, a computer-readable program is provided, wherein when the program is executed in an information acquiring apparatus or a base station, the program enables a computer to carry out the above information acquiring method in the information acquiring apparatus or the base station.

According to a fifteenth aspect, a storage medium in which a computer-readable program is stored is provided, wherein the computer-readable program enables a computer to carry out the above information acquiring method in an information acquiring apparatus or a base station.

According to a sixteenth aspect, a computer-readable program is provided, wherein when the program is executed in a parameter optimizing apparatus or a base station, the program enables a computer to carry out the above parameter optimizing method in the parameter optimizing apparatus or the base station.

According to a seventeenth aspect, a storage medium in which a computer-readable program is stored is provided, wherein the computer-readable program enables a computer to carry out the above parameter optimizing method in a parameter optimizing apparatus or a base station.

According to an eighteenth aspect, a computer-readable program is provided, wherein when the program is executed in a parameter configuring apparatus or base station, the program enables a computer to carry out the above parameter configuring method in the parameter configuring apparatus or the base station.

According to a nineteenth aspect, a storage medium in which a computer-readable program is stored is provided, wherein the computer-readable program enables a computer to carry out the above parameter configuring method in a parameter configuring apparatus or a base station.

Advantages of the embodiments of the present invention exist in that cell types corresponding to coverage ranges of cells may be configured, thereby further configuring triggering conditions corresponding to the cell types, and satisfying traffic demands when the cell ranges are dynamic. Furthermore, the parameter-correcting base station may determine whether to correct the handover parameters between it and the neighboring cells according to the collected information containing the cell types or the absolute time of the handover failure.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The above and other objects, features and advantages of the embodiments of the invention will be or become apparent upon examination of the following drawings and detailed description. In the drawings:
Figure 1 is a flowchart of a parameter configuring method of Embodiment 1 of the present invention;
Figure 2 is a flowchart of a parameter configuring method of Embodiment 2 of the present invention;
Figure 3 is a schematic diagram of a structure of a parameter configuring apparatus of Embodiment 3 of the present invention;
Figure 4 is a schematic diagram of a structure of a parameter configuring apparatus of Embodiment 4 of the present invention;
Figure 5 is a flowchart of an information acquiring method of Embodiment 6 of the present invention;
Figure 6 is a flowchart of an information acquiring method of Embodiment 7 of the present invention;
Figure 7 is a flowchart of an information acquiring method of Embodiment 8 of the present invention;
Figure 8 is a flowchart of an information acquiring method of Embodiment 9 of the present invention;
Figure 9 is a flowchart of an information acquiring method of Embodiment 10 of the present invention;
Figure 10 is a flowchart of an information acquiring method of Embodiment 11 of the present invention;
Figure 11 is a flowchart of a parameter optimizing method of Embodiment 12 of the present invention;
Figure 12 is another flowchart of the parameter optimizing method of Embodiment 12 of the present invention;
Figure 13 is a schematic diagram of a structure of an information acquiring apparatus of Embodiment 13 of the present invention;
Figure 14 is a schematic diagram of a structure of an information acquiring apparatus of Embodiment 14 of the present invention;
Figure 15 is a schematic diagram of an information acquiring apparatus of Embodiment 15 of the present invention;
Figure 16 is a schematic diagram of a structure of an information acquiring apparatus of Embodiment 16 of the present invention;
Figure 17 is a schematic diagram of a structure of an information acquiring apparatus of Embodiment 18 of the present invention;
Figure 18 is a schematic diagram of a structure of an information acquiring apparatus of Embodiment 19 of the present invention;
Figure 19 is a schematic diagram of a structure of an information acquiring apparatus of Embodiment 20 of the present invention;
Figure 20 is a schematic diagram of a structure of a parameter optimizing apparatus of Embodiment 22 of the present invention; and
Figure 21 is a schematic diagram of a structure of a parameter optimizing apparatus of Embodiment 23 of the present invention.

### Detailed Description

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents falling within the scope of the appended claims.

According to an existing protocol, the MRO is only applicable to a scenario where a coverage range of a cell is relatively stable. As an AAS is introduced, the coverage range of the cell may change dynamically. Therefore, there is a need to enhance the existing MRO mechanism.

### Embodiment 1

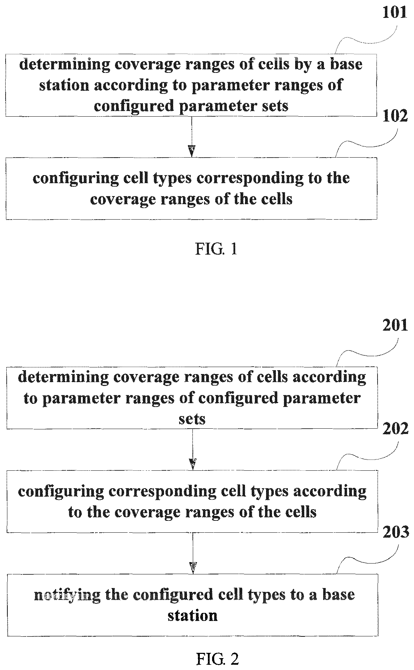

Fig. 1 is a flowchart of a parameter configuring method of Embodiment 1 of the present invention; wherein parameters are configured by a base station side. As shown in Fig. 1, the method includes:
step 101: determining coverage ranges of cells by a base station according to parameter ranges of configured parameter sets.

In this embodiment, more than one group of parameter sets may be configured by the base station. For example, the parameter sets may include cell antenna group parameters, such as power values, tilt angles, and antenna forming modes, etc. In this way, the base station may determine the coverage ranges of the cells according to the parameter ranges, such as dividing the coverage ranges of the cells into large, medium and small coverage ranges. Hence, different coverage ranges of cells may be configured with different handover triggering conditions, thereby satisfying demands of traffics.

In this embodiment, after the coverage ranges of the cells are determined, cell types corresponding to the coverage ranges of the cells may further be configured. For example, the coverage ranges of the cells are determined as large, medium and small coverage ranges, the corresponding types may be parametrically expressed as k1, k2 and k3; or the coverage ranges of the cells are determined as large and medium coverage ranges, the corresponding types may be parametrically expressed as k1 and k2.

In such a case, as shown in Fig. 1, the method further includes step 102: configuring cell types corresponding to the coverage ranges of the cells by the base station.

When the coverage ranges of the cells change, the base station may notify changed cell types to a neighboring base station.

In this embodiment, when the base station performs operations of cell division, cell combination or cell forming, the coverage ranges of the cells change. Hence, the cell types, that is the k values will also change. And the base station may transmit the changed cell types to the neighboring base station via *Served Cell Information* IE. However, it is not limited to the above message, and the neighboring base station may also be notified via other messages.

### Embodiment 2

Fig. 2 is a flowchart of a parameter configuring method of Embodiment 2 of the present invention; wherein the parameter is configured by a network side entity, such as OAM. As shown in Fig. 2, the method includes:
step 201: determining coverage ranges of cells by the network side entity according to parameter ranges of configured parameter sets;
step 202: configuring corresponding cell types according to the coverage ranges of the cells; and
step 203: notifying the configured cell types to a base station.

When the coverage ranges of the cells change, the network side entity may notify changed cell types to a neighboring base station, which is similar to that described in Embodiment 1, and shall not be described herein any further.

It can be seen from the above embodiment that the cells are classified according to the coverage ranges of the cells, with different types of cells corresponding to different parameter sets, and different handover triggering conditions (handover parameters) may be configured corresponding to different types of cells, so as to satisfy demands of traffics.

### Embodiment 3

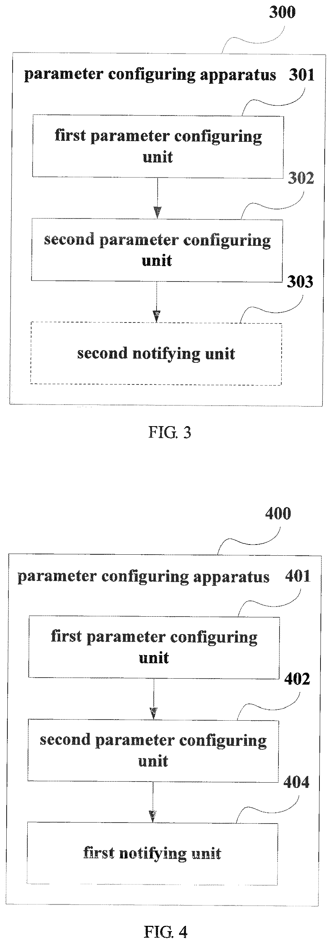

Fig. 3 is a schematic diagram of a structure of a parameter configuring apparatus of Embodiment 3 of the present invention. As shown in Fig. 3, the apparatus 300 includes a first parameter configuring unit 301 and a second parameter configuring unit 302; wherein the first parameter configuring unit 301 is configured to determine coverage ranges of cells according to parameter ranges of configured more than one group of parameter sets, and the second parameter configuring unit 302 is configured to configure cell types corresponding to the coverage ranges of cells.

In this embodiment, the apparatus 300 may further include a second notifying unit 303 configured to notify information on a changed cell type to a neighboring base station when the coverage ranges of cells change.

### Embodiment 4

Fig. 4 is a schematic diagram of a structure of a parameter configuring apparatus of Embodiment 4 of the present invention. As shown in Fig. 4, the apparatus 400 includes a first parameter configuring unit 401 and a second parameter configuring unit 402, with their function being similar to those in Embodiment 3, which shall not be described herein any further.

As shown in Fig. 4, the apparatus 400 may further include a first notifying unit 403 configured to notify a base station of the configured cell types.

In such a case, the base station may receive cell types transmitted by a network side entity.

It can be seen from the above embodiment that the base station or the network side entity configures the cell types according to the coverage ranges of the cells, different types of cells correspond to different parameter sets, and different handover parameters may be configured for different types of cells, so as to satisfy demands of traffics.

### Embodiment 5

Embodiment 5 of the present invention provides an information acquiring method. The method includes: receiving, by a first base station, information transmitted by user equipment, or a second base station, or a third base station; wherein, the information includes relevant information used by a network side to determine cell types of the first base station and the second base station when handover initiation or link failure occurs.

In this embodiment, the first base station is a base station where the user equipment (UE) is located when handover failure occurs, or a base station reestablished or newly established successfully by the user equipment; the second base station is a base station serving for the user equipment before link failure which occurs when handover failure occurs, or a base station reestablished or newly established successfully; and the third base station is a base station reestablished or newly established successfully by the user equipment after the handover failure occurs.

In this embodiment, the relevant information may be information about time, and may include a first time (such as timeConnFailure) from the beginning of the handover to occurrence of connection failure in the user equipment, and a second time (such as timeSinceFailure) from the occurrence of connection failure to current time (for example, when the above information about time is transmitted via an RLF report, the current time is a time when the UE transmits the RLF report), or may include only the second time from the occurrence of connection failure to the current time.

Hence, a source base station (the first base station) may acquire the above relevant information from other base stations at the network side or from the user equipment, and may determine how much time has elapsed since the occurrence of the handover failure of this time, thereby learning respective cell types, that is k values, of a local cell (a cell of the source base station) and a target cell (a cell of a target base station), when the handover failure occurs.

In this embodiment, the second base station receives the information notified by the user equipment or the first base station or the third base station; wherein the information includes the relevant information used by the network side to determine the cell types of the first base station and the second base station when handover initiation or link failure occurs.

Furthermore, when the second base station receives the information notified by the user equipment or the third base station, the method includes: notifying the first base station of the information. Hence, the first base station obtains the relevant information.

In this embodiment, the third base station receives the information notified by the user equipment, the information including the relevant information used by the network side to determine the cell types of the first base station and the second base station when handover initiation or link failure occurs, and notifies the second base station or the first base station of the information. Hence, the relevant information is notified to the first base station directly or by the second base station.

It can be seen from the above embodiment that the first base station may acquire the information on the cell types. And as the cell types correspond to the coverage ranges of the cells, when the base station judges whether the handover parameters (such as handover triggering conditions) are properly set, the judgment may be performed based on the above parameters, and demands of traffics may be satisfied even if the coverage ranges of the cells may change dynamically.

The embodiments of the present invention shall be described below taking handover too late, handover too early and handover to a wrong cell as examples.

### Embodiment 6

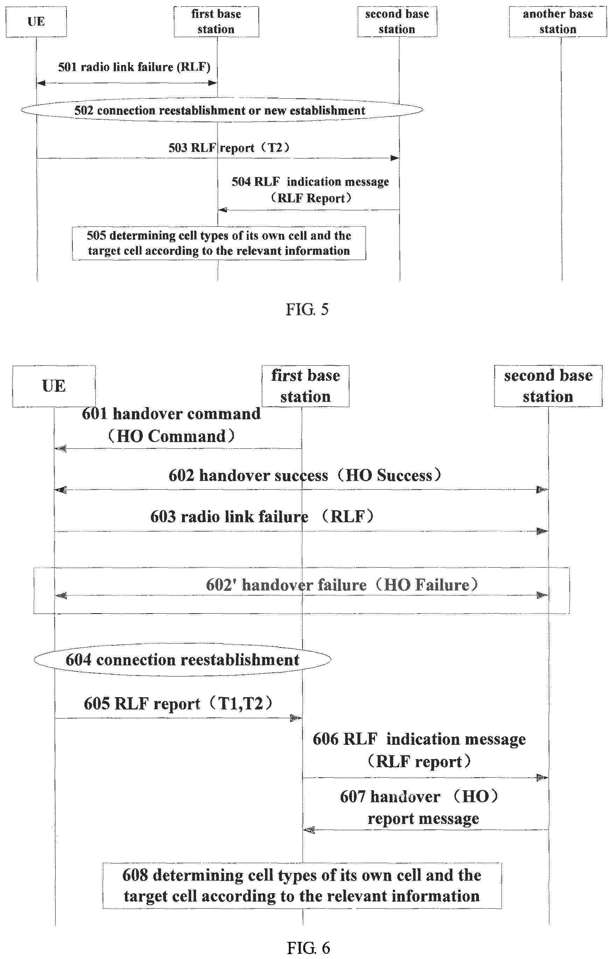

Fig. 5 is a flowchart of an information acquiring method of Embodiment 6 of the present invention. In this embodiment, if handover failure is handover too late, when the handover failure occurs, a base station (a source base station) where user equipment (UE) is located is a first base station; after the handover failure, the UE performs reestablishment or new establishment in a target cell and the reestablishment or new establishment is successful, and a base station of the target cell is a second base station.

As shown in Fig. 5, the method includes:
step 501: link failure occurs in the UE;
   in this embodiment, when the UE is not handed over while it should be, the UE is made stayed in the first base station too long, and radio link failure (RLF) occurs;
step 502: performing connection reestablishment or new establishment by the UE, the reestablishment or new establishment being successful;
   in this embodiment, the UE performs cell reselection, and performs reestablishment or new establishment in the second base station, with a particular process of reestablishment or new establishment being as described in prior art, which shall not be described herein any further;
step 503: transmitting relevant information by the UE to the second base station after the reestablishment or new establishment succeeds, the relevant information including the above second time (denoted by T2);
   in this embodiment, the relevant information may be contained in an RLF report for notifying the second base station; for example, the relevant information may be contained in an information element (IE) containing timeSinceFailure; hence, the second time denotes a period of time from occurrence of connection failure to transmission of the RLF report; however, a message for transmitting the second time is not limited thereto, and the second base station may be notified via any other messages;
   furthermore, the UE may further notify other relevant information to the second base station via the RLF report, the notified relevant information may be as described in prior art, which shall not be described herein any further;
step 504: transmitting the relevant information to the first base station by the second base station after receiving the relevant information transmitted by the UE;
   in this embodiment, the relevant information may be transmitted to the first base station via RLF indication information, the indication information containing the RLF report;
step 505: determining a cell type, i.e. a k value, of the target cell, by the first base station according to the relevant information after obtaining the relevant information;
   wherein, the source base station in which the handover failure occurs may determine how much time has elapsed since the occurrence of the handover failure of this time according to the first time and the second time; that is, it may learn that the handover failure of this time occurs before a time T, and the first base station may learn a k value of its own cell before the time T; furthermore, as the first base station is notified when a k value of a neighboring cell changes, the first base station may determine k values of all neighboring cells before the time T; in this way, the first base station may determine the k value of the target cell according to the relevant information.

### Embodiment 7

Fig. 6 is a flowchart of an information acquiring method of Embodiment 7 of the present invention. In this embodiment, if handover failure is handover too early, after the handover failure occurs, a base station (a source base station) where UE is located is a first base station; after the handover failure, the UE performs reestablishment or new establishment in a source cell and the reestablishment or new establishment is successful. For example, connection reestablishment is performed in this embodiment, and the reestablishment is successful.

As shown in Fig. 6, the method includes:
step 601: receiving by the UE a handover command (HO command) transmitted by a source base station (a first base station);
steps 602 and 603: being handed over successfully by the UE from a source cell (a cell of the first base station) to a target cell (a cell of a second base station), and RLF occurs immediately; or step 602': HO failure occurs in a handover process;
step 604: performing connection reestablishment by the UE in the source cell after the handover failure;
step 605: transmitting relevant information by the UE to the first base station after the reestablishment successes, the relevant information including the above first time (denoted by T1) and second time (denoted by T2);
   in this embodiment, the first base station is not only the source base station, but also a base station where the UE reestablishes successfully after the handover failure;
   contents contained in the relevant information and a manner of transmission of the relevant information are as described in Embodiment 6, which shall not be described herein any further;
step 606: transmitting the relevant information by the first base station to the second base station;
   in this embodiment, the relevant information may be transmitted to the second base station via RLF indication information, the indication information containing an RLF report, but it may also be transmitted via other messages;
step 607: feeding back a handover report by the second base station to the first base station after receiving the relevant information transmitted by the UE;
   in this embodiment, failure of transmission of this time being handover too early is notified to the first base station via the handover report;
step 608: being similar to Embodiment 6, which shall not be described herein any further; furthermore, an order of execution of this step is not limited to the embodiment shown in Fig. 6, which may be executed after step 605 or 606.

### Embodiment 8

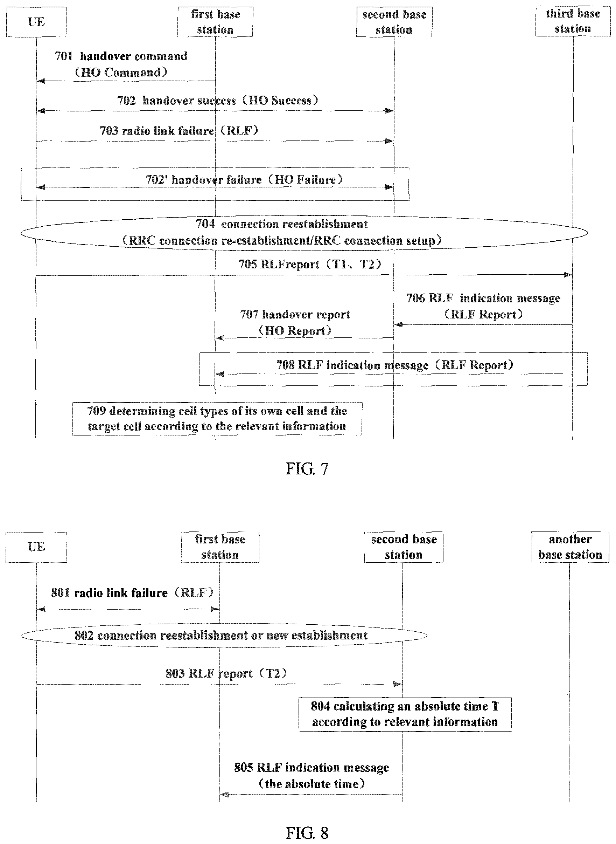

Fig. 7 is a flowchart of an information acquiring method of Embodiment 8 of the present invention. In this embodiment, if handover failure is handover to a wrong cell, after the handover failure occurs, a base station (a source base station) where UE is located is a first base station; after the handover failure, the UE performs reestablishment or new establishment in a cell of a third base station rather than a source cell and a target cell, and the reestablishment or new establishment is successful. In this embodiment, situations of the target cell are similar to those in Embodiment 6.

As shown in Fig. 7, the method includes:
step 701: receiving by the UE a handover command (HO command) transmitted by a source base station (a first base station);
steps 702 and 703 or step 702' are similar to steps 602 and 603 or step 602' in Embodiment 7, which shall not be described herein any further;
step 704: performing connection reestablishment or new establishment by the UE in a cell of the third base station after the handover failure;
step 705: transmitting relevant information by the UE to the third base station after the reestablishment or new establishment successes, the relevant information including the above first time (denoted by T1) and second time (denoted by T2);
   contents contained in the relevant information and a manner of transmission of the relevant information are as described in Embodiment 6, which shall not be described herein any further;
step 706: transmitting the relevant information by the third base station to the second base station after receiving the relevant information;
   in this embodiment, the relevant information may be transmitted to the second base station via RLF indication information, the indication information containing an RLF report;
step 707: feeding back a handover report by the second base station to the first base station after receiving the relevant information transmitted by the UE, and transmitting the relevant information by the second base station to the first base station;
   in a case of executing steps 702 and 703 (that is, link failure occurs immediately after the handover successes), steps 706 and 707 are executed after step 705;
   in a case of executing step 702' (failure occurs in the handover process), step 708 is executed after step 705, transmitting the relevant information directly to the first base station; wherein the relevant information may be transmitted via the RLF report; however, it is not limited to such a message;
step 709: similar to steps 608 and 505, which shall not be described herein any further.

In the above embodiment, when the handover too late, handover too early and handover to a wrong cell occur, the first base station may obtain the relevant information from the UE or other base stations at the network side, and determine cell types of a local cell and the target cell based on the relevant information. In this way, the first base station may collect a certain number of samples including the cell types, and judge whether the handover parameters between it and other base stations are set properly based on the samples.

Furthermore, when the handover too late, handover too early and handover to a wrong cell occur, the first base station may obtain an absolute time when the handover initialization or link failure occurs from the UE or other base stations at the network side. In this way, the first base station may collect a certain number of samples including the absolute time, and judge whether the handover parameters between it and other base stations are set properly based on the samples. In this embodiment, the second base station or the third base station receives the relevant information transmitted by the UE, calculates the absolute time when the handover initialization or the link failure occurs in the UE according to the relevant information, and then transmits the absolute time to the first base station or transmits the absolute time to the first base station via the second base station. The embodiments of the present invention shall be described below with reference to the accompanying drawings taking handover too late, handover too early and handover to a wrong cell as examples, respectively.

### Embodiment 9

Fig. 8 is a flowchart of an information acquiring method of Embodiment 9 of the present invention. In this embodiment, description is given taking the handover too late as an example, which is similar to Embodiment 6, with steps identical to those in Embodiment 6 being going to be described in brief, and steps different from those in Embodiment 6 being going to be described in detail.

As shown in Fig. 8, the method includes:
steps 801-803 are similar to steps 501-503 in Embodiment 6, which shall not be described herein any further;
step 804: calculating an absolute time of occurrence of handover failure in UE by a second base station according to relevant information after receiving the relevant information transmitted by the UE;
   in this embodiment, the relevant information includes the second time; hence, the absolute time of occurrence of radio link failure (RLF) may be calculated according to the second time;
step 805: transmitting the absolute time by the second base station to the first base station;
   in this embodiment, the absolute time may be transmitted to the first base station via an RLF indication message, the indication message containing the absolute time.

Hence, the first base station may collect a certain number of samples including the absolute time. The first base station may learn that handover failure frequently occurs in a certain period of time according to the samples, thereby judging whether the handover parameters between it and the neighboring cells are set properly. If adjustment is needed, the base station may notify a base station where a cell needing to be corrected with respect to parameters is located to perform parameter adjustment, and correct the handover parameters after an acknowledge message of the base station is received, with a parameter optimizing method corresponding to this method being going to be described in an embodiment below.

### Embodiment 10

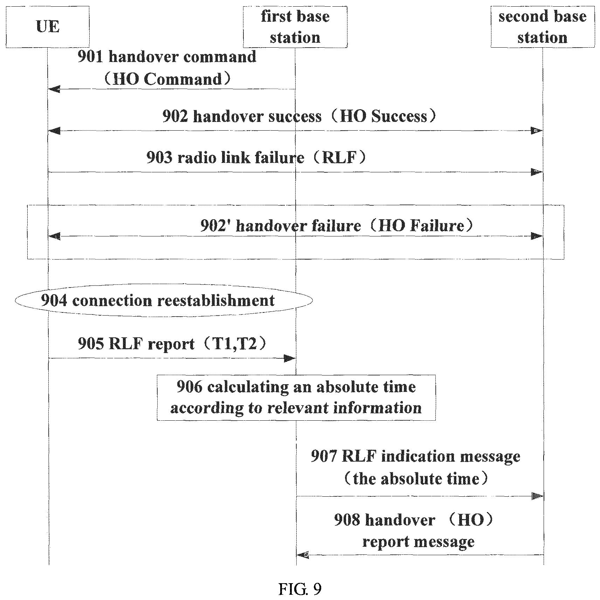

Fig. 9 is a flowchart of an information acquiring method of Embodiment 10 of the present invention. In this embodiment, description is given taking the handover too early as an example. Based on Embodiment 7, steps identical to those in Embodiment 7 shall be described in brief, and steps different from those in Embodiment 7 shall be described in detail, taking connection reestablishment as an example.

As shown in Fig. 9, the method includes:
steps 901-905 are similar to steps 601-605 in Embodiment 7, which shall not be described herein any further;
step 906: calculating an absolute time of occurrence of handover initialization in UE (such as receiving a handover command) by a first base station according to relevant information after receiving the relevant information transmitted by the UE;
   in this embodiment, the first base station may calculate the absolute time of occurrence of handover initialization according to the first time and the second time;
step 907: transmitting the absolute time by the first base station to the second base station; and
step 908: feeding back a handover message by the second base station to the first base station;
   in this embodiment, the process is similar to prior art, and shall not be described herein any further

### Embodiment 11

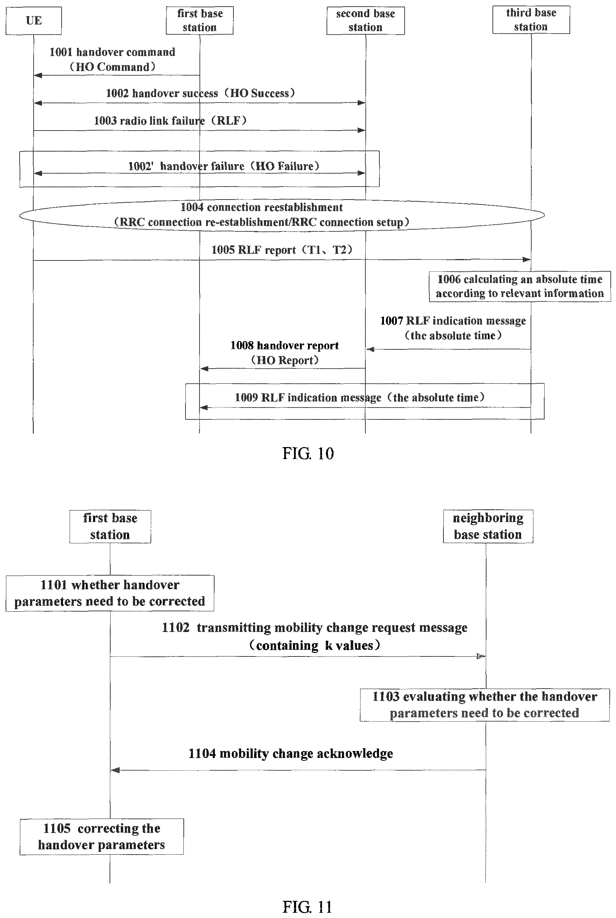

Fig. 10 is a flowchart of an information acquiring method of Embodiment 11 of the present invention. In this embodiment, description is given taking the handover to a wrong cell as an example. Based on Embodiment 8, steps identical to those in Embodiment 8 shall be described in brief, and steps different from those in Embodiment 8 shall be described in detail.

As shown in Fig. 10, the method includes:
steps 1001-1005 are similar to steps 701-705, which shall not be described herein any further;
step 1006: calculating an absolute time of occurrence of handover initialization in UE by the third base station according to relevant information after receiving the relevant information transmitted by the UE;
   in this embodiment, the first base station may calculate the absolute time of occurrence of handover initialization according to the first time and the second time;
step 1007: transmitting the absolute time to the second base station;
   similar to Embodiment 8, the absolute time is transmitted to the second base station via an RLF indication message;
step 1008: feeding back a handover report by the second base station to the first base station after receiving the absolute time transmitted by the UE, and transmitting the absolute time by the second base station to the first base station;
   or steps 1007-1008 are not executed, and step 1009 is executed: transmitting the absolute time to the first base station; similar to Embodiment 8, the absolute time may be transmitted via an RLF indication message.

In the above Embodiments 9-11, T1 and/or T2 used for calculating the absolute time may be T1 and T2 in Embodiments 6-8, which may be used to determine cell types; furthermore, T1 and/or T2 used for calculating the absolute time is/are time value(s) only, and is/are unrelated to determining the cell types.

In the above embodiments, when the handover too early, handover too late and handover to a wrong cell occur, the first base station may obtain the relevant information from the UE or other base stations at the network side, and calculate the absolute time when the handover initialization or RLF occurs based on the relevant information. In this way, the first base station may collect a certain number of samples including the absolute time, and judge whether the handover parameters between it and neighboring cells are set properly based on the samples.

In the above embodiments, the first base station, the second base station and the third base station may be different base stations, and may also be identical base stations.

It can be seen from the above embodiments that the first base station (the source base station/the parameter-correcting base station) may collect a certain number of samples including the cell types or the absolute time within a period of time. The first base station may judge whether the handover parameters (the handover triggering conditions) between it and the neighboring cells are set properly according to the samples. If adjustment is needed, the base station may notify a neighboring base station where a cell needing to be corrected with respect to parameters is located to perform parameter adjustment, and correct the handover parameters after an acknowledge message of the neighboring base station is received, with a parameter optimizing method corresponding to this method being going to be described in an embodiment below.

### Embodiment 12

Embodiment 12 of the present invention provides a parameter optimizing method. At a parameter-correcting base station side, the method includes: notifying information containing cell types of a source cell and a target cell or containing an absolute time period indicating frequent occurrence of handover failure to a base station where a cell needing to be corrected with respect to parameters is located, by a parameter-correcting base station, in detecting that handover parameters between it and neighboring cells need to be corrected.

In this embodiment, the method further includes: receiving a response message capable of correcting the handover parameters fed back by the base station where the cell needing to be corrected with respect to parameters is located; and correcting the handover parameters.

In this embodiment, at a side of a base station where a cell needing to be corrected with respect to parameters is located, the method includes: receiving information containing cell types of a source cell and a target cell or containing an absolute time period indicating frequent occurrence of handover failure transmitted by a parameter-correcting base station; evaluating according to the information whether to accept a correction of the handover parameters; and transmitting a corresponding response message to the parameter-correcting base station when the correction of the handover parameters is accepted.

In this embodiment, the parameter optimizing method is described based on the samples of the cell types obtained based on Embodiments 5-8.

Fig. 11 is a flowchart of a parameter optimizing method of Embodiment 12 of the present invention. As shown in Fig. 11, a first base station (a source base station, a parameter-correcting base station) collects the samples by using the methods in Embodiments 5-8.

As shown in Fig. 11, the method includes:
step 1101: notifying information containing cell types of a source cell and a target cell to a base station where a cell needing to be corrected with respect to parameters is located, by a parameter-correcting base station, in detecting that handover parameters between it and neighboring cells need to be corrected;
   in this embodiment, the information is notified to the base station where the cell needing to be corrected with respect to parameters is located via a mobility change request, which is similar to prior art, and shall not be described herein any further;
step 1102: receiving by the base station (neighboring base station) where the cell needing to be corrected with respect to parameters is located, the information containing cell types of a source cell and a target cell transmitted by the parameter-correcting base station;
step 1103: evaluating by the base station where the cell needing to be corrected with respect to parameters is located, whether the handover parameters need to be corrected;
step 1104: transmitting an acknowledge message by the base station where the cell needing to be corrected with respect to parameters is located to the parameter-correcting base station in a case which the handover parameters need to be corrected;
   in this embodiment, the acknowledge message may be a mobility change acknowledge message;
step 1105: correcting the handover parameters of the cell needing to be corrected with respect to parameters by the parameter-correcting base station after receiving the acknowledge message.

Furthermore, the parameter optimizing method shall be described based on the situations in embodiments 9-11.

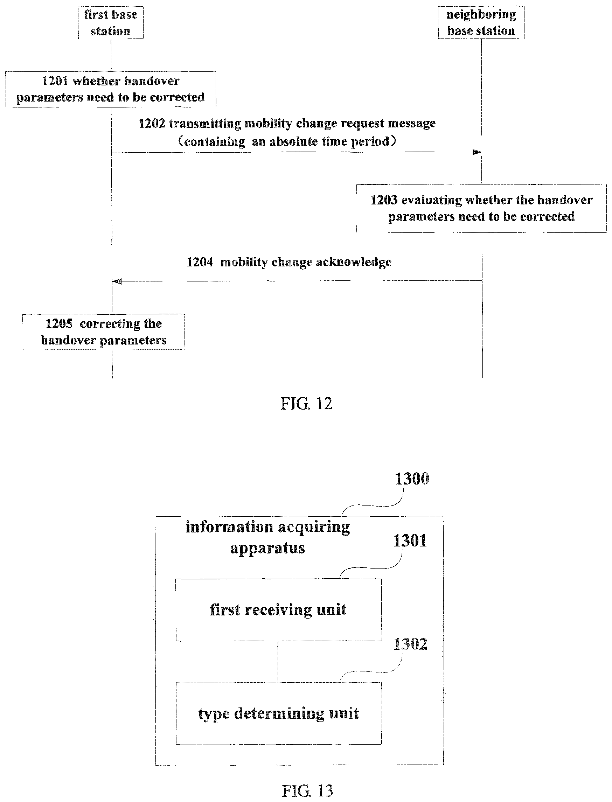

Fig. 12 is another flowchart of the parameter optimizing method of Embodiment 12 of the present invention

As shown in Fig. 12, the method includes:
step 1201: notifying a base station where a cell needing to be corrected with respect to parameters is located via a mobility change request, which is similar to step 1101;
step 1202: receiving by the base station where the cell needing to be corrected with respect to parameters is present, information containing a specific time period transmitted by the parameter-correcting base station;
   in this embodiment, the specific time period refers to a time period in which a certain type of handover failure occurs frequently; in this way, in this specific time period, as the certain type of handover failure occurs frequently, handover parameters need to be corrected;
step 1203: evaluating by the base station where the cell needing to be corrected with respect to parameters is located, whether the handover parameters need to be corrected, by using the above time information;
   in this embodiment, the specific time period is notified to a base station where a target cell is located, so that the base station where the target cell is located learns which set of parameters in the handover parameters needing to be corrected, that is, which group of handover parameters are used in the specific time period;
step 1204: transmitting an acknowledge message by the base station where the cell needing to be corrected with respect to parameters is located to the parameter-correcting base station in a case which the handover parameters need to be corrected;
   in this embodiment, the acknowledge message may be a mobility change acknowledge message;
step 1205: correcting the handover parameters of the cell needing to be corrected with respect to parameters by the parameter-correcting base station after receiving the acknowledge message.

It can be seen from the above embodiment that the parameter-correcting base station may collect the information containing the cell types or the absolute time of the handover failure, and use the above information to judge the cell needing to be corrected with respect to parameters, so as to perform parameter optimization.

### Embodiment 13

Fig. 13 is a schematic diagram of a structure of an information acquiring apparatus of Embodiment 13 of the present invention. The apparatus 1300 includes: a first receiving unit 1301 configured to receive information transmitted by user equipment, or a second base station or a third base station; wherein, the information includes relevant information used by a network side to determine cell types of a first base station and a second base station when handover initiation or link failure occurs.

In this embodiment, the first base station is a base station where the user equipment is located when handover failure occurs, or a base station reestablished or newly established successfully by the user equipment; the second base station is a base station serving for the user equipment before link failure which occurs when handover failure occurs, or a base station reestablished or newly established successfully; and the third base station is a base station reestablished successfully by the user equipment after the handover failure occurs.

In this embodiment, the relevant information is as described in the above embodiments, which shall not be described herein any further.

As shown in Fig. 13, the apparatus 1300 may further include a type determining unit 1302 configured to determine cell types of the first base station and the second base station when the handover initiation or link failure occurs according to the relevant information. A particular method of determination is as described in the above embodiments, which shall not be described herein any further.

In this embodiment, the apparatus corresponds to a source base station side (the first base station), with its particular manner of operation being as described in embodiments 6-8, which shall not be described herein any further.

### Embodiment 14

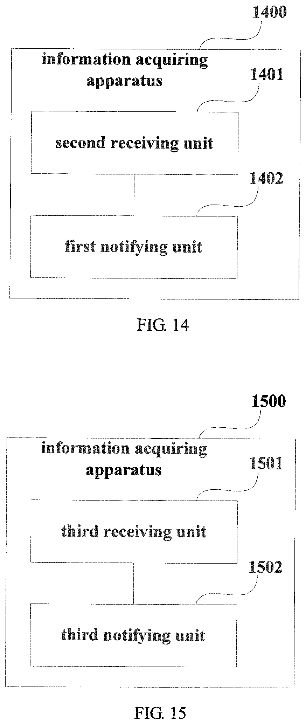

Fig. 14 is a schematic diagram of a structure of an information acquiring apparatus of Embodiment 14 of the present invention. As shown in Fig. 14, the apparatus 1400 includes: a second receiving unit 1401 configured to receive information notified by user equipment or a first base station or a third base station; wherein the information includes relevant information used by a network side to determine cell types of the first base station and the second base station when handover initiation or link failure occurs.

The first base station, the second base station and the third base station are as described in the above embodiments, which shall not be described herein any further.

In this embodiment, in receiving the above information notified by the UE or the third base station, the apparatus 1400 further includes: a first notifying unit 1402 configured to notify the first base station of the information.

In this embodiment, the apparatus corresponds to a target base station side (the second base station), with its particular manner of operation being as described in embodiments 5-8, which shall not be described herein any further.

### Embodiment 15

Fig. 15 is a schematic diagram of a structure of an information acquiring apparatus of Embodiment 15 of the present invention. As shown in Fig. 15, the apparatus 1500 includes a third receiving unit 1501 configured to receive information notified by user equipment; wherein the information includes relevant information used by a network side to determine cell types of the first base station and the second base station when handover initiation or link failure occurs; and a third notifying unit 1502 configured to notify the second base station or the first base station of the information.

In this embodiment, the apparatus corresponds to another base station side (the third base station), with its particular manner of operation being as described in Embodiments 5-8, which shall not be described herein any further.

Above Embodiments 13-15 are described taking that the source base station acquires the cell types of the local cell and the target cell as examples, and the following description is given taking that the source base station acquires an absolute time of handover failure as examples.

### Embodiment 16

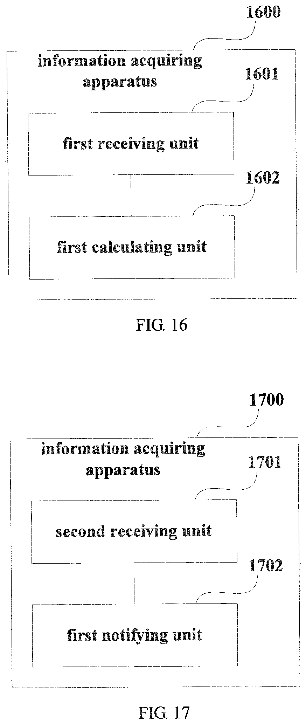

Fig. 16 is a schematic diagram of a structure of an information acquiring apparatus of Embodiment 16 of the present invention. As shown in Fig. 16, the apparatus 1600 includes a first receiving unit 1601 and a first calculating unit 1602; wherein, the first receiving unit 1601 is configured to receive information transmitted by user equipment; and wherein, the information includes relevant information used by a network side to determine cell types of the first base station and the second base station when handover initiation or link failure occurs; and the first calculating unit 1602 is configured to calculate the absolute time when the handover initiation or link failure occurs in the user equipment according to the relevant information.

It can be seen from the above embodiment that when the apparatus 1600 is provided at the side of the source base station of the network, when the handover too early occurs, the apparatus 1600 may receive the relevant information transmitted by the UE, and calculate the absolute time when the handover initiation or link failure occurs according to the relevant information.

### Embodiment 17

Embodiment 17 of the present invention further provides an information acquiring apparatus. The apparatus includes: a first receiving unit configured to receive information transmitted by a second base station or a third base station; wherein, the information includes an absolute time when handover initiation or link failure occurs in user equipment.

In such a case, the apparatus may receive the absolute time directly from the second base station or the third base station, without needing to calculate the absolute time, which corresponds to the handover too late and the handover to a wrong cell, as described in Embodiments 9 and 10.

### Embodiment 18

Figure 17 is a schematic diagram of a structure of an information acquiring apparatus of Embodiment 18 of the present invention. As shown in Figure 17, the apparatus 1700 includes: a second receiving unit 1701 configured to receive information notified by a first base station or a third base station; wherein the information includes an absolute time when handover initiation or link failure occurs in user equipment.

In this embodiment, when the handover too early or the handover to a wrong cell occurs, the apparatus 1700 may obtain the absolute time from the first base station and the third base station, without needing to calculate by itself.

In this embodiment, if the handover failure is the handover to a wrong cell, in receiving the information notified by the third base station, the information may further be transmitted to the first base station.

Hence, as shown in Fig. 17, the apparatus 1700 may further include a first notifying unit 1702 configured to notify the first base station of the received absolute time.

### Embodiment 19

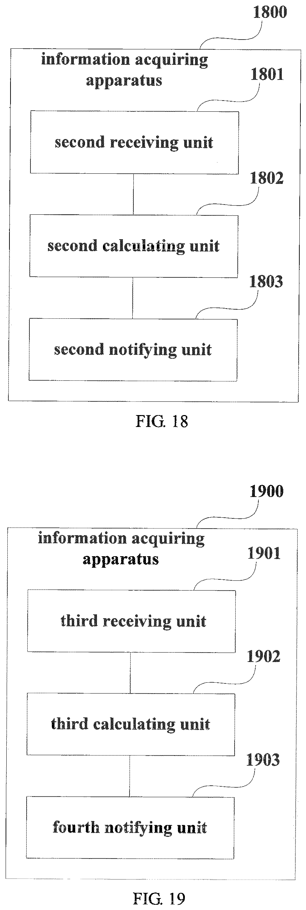

Figure 18 is a schematic diagram of a structure of an information acquiring apparatus of Embodiment 19 of the present invention. As shown in Figure 18, the apparatus 1800 includes: a second receiving unit 1801 configured to receive information notified by user equipment; wherein the information includes relevant information used by a network side to determine cell types of the first base station and the second base station when handover initiation or link failure occurs.

In this embodiment, when the handover too late occurs, the apparatus 1800 may obtain the relevant information from the UE, obtain an absolute time through calculation according to the relevant information, and notify the absolute time to the first base station.

In such a case, as shown in Fig. 18, the apparatus 1800 may further include a second calculating unit 1802 and a second notifying unit 1803; wherein, the second calculating unit 1802 is configured to calculate the absolute time when the handover initiation or link failure occurs in the user equipment according to the relevant information; and the second notifying unit 1803 is configured to notify the first base station of the absolute time.

When the handover to a wrong cell occurs, after receiving the relevant information transmitted by the UE, the relevant information may be used to calculate the absolute time, and then the absolute time is transmitted to the first base station.

### Embodiment 20

Figure 19 is a schematic diagram of a structure of an information acquiring apparatus of Embodiment 20 of the present invention. As shown in Figure 19, the apparatus 1900 includes: a third receiving unit 1901, a third calculating unit 1902 and a fourth notifying unit 1903; wherein,
the third receiving unit 1901 is configured to receive information notified by user equipment; wherein the information includes relevant information used by a network side to determine cell types of the first base station and the second base station when handover initiation or link failure occurs;
the third calculating unit 1902 is configured to calculate an absolute time when the handover initiation or link failure occurs in the user equipment according to the relevant information;
and the fourth notifying unit 1903 is configured to notify the second base station or the first base station of the absolute time.

In this embodiment, when the handover to a wrong cell occurs, after receiving the relevant information transmitted by the UE, the relevant information may be used to calculate the absolute time, and then the absolute time is transmitted to the first base station or the second base station.

### Embodiment 21

Embodiment 21 of the present invention further provides an information acquiring apparatus, including:
an information transmitting unit configured to transmit information to a network side when handover initiation or link failure occurs, the information including relevant information used to determine cell types of the first base station and the second base station by the network side when handover initiation or link failure occurs, or the information including an absolute time when handover initiation or link failure occurs in the user equipment.

A particular process is as described in Embodiments 5-11, which shall not be described herein any further.

### Embodiment 22

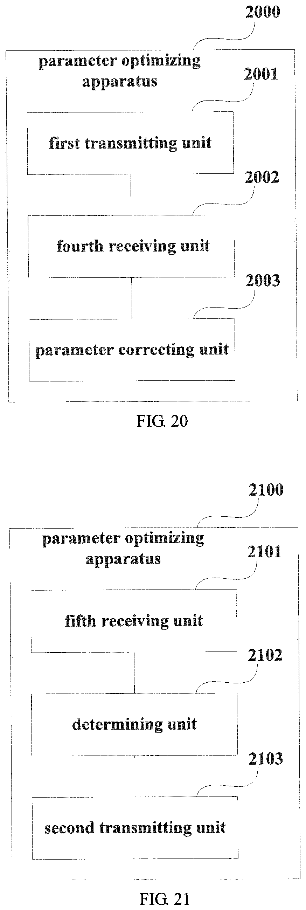

Fig. 20 is a schematic diagram of a structure of a parameter optimizing apparatus of Embodiment 22 of the present invention. As shown in Fig. 20, the apparatus 2000 includes:
a first transmitting unit 2001 configured to notify information containing cell types of a source cell and a target cell or containing an absolute time period indicating frequent occurrence of handover failure to a base station where a cell needing to be corrected with respect to parameters is located, in detecting that handover parameters between a base station where the apparatus is located and neighboring cells need to be corrected.

In this embodiment, the apparatus 2000 further includes: a fourth receiving unit 2002 configured to receive a response message capable of correcting the handover parameters fed back by the base station where the cell needing to be corrected with respect to parameters is located; and a parameter correcting unit 2003 configured to correct the handover parameters.

### Embodiment 23

Fig. 21 is a schematic diagram of a structure of a parameter optimizing apparatus of Embodiment 23 of the present invention. As shown in Fig. 21, the apparatus 2100 includes:
a fifth receiving unit 2101 configured to receive information containing cell types of a source cell and a target cell or containing an absolute time period indicating frequent occurrence of handover failure transmitted by a parameter-correcting base station; a determining unit 2102 configured to evaluate according to the information whether to accept a correction of the handover parameters; and a second transmitting unit 2103 configured to transmit a corresponding response message to the parameter-correcting base station when an evaluating result of the determining unit 2102 is to accept the correction of the handover parameters.

In the above embodiments, the components of the information acquiring apparatus and the parameter optimizing apparatus of Embodiments 13-20 and 22-23 may be arbitrarily combined for use.

### Embodiment 24

Embodiment 24 of the present invention provides UE, including the apparatus as described in Embodiment 21.

### Embodiment 25

Embodiment 25 of the present invention provides a base station, including the apparatus as described in any one of Embodiments 13-20 and 22-23 or any combination of components thereof, which are as described in the above embodiments, and shall not be described herein any further.

### Embodiment 26

Embodiment 26 of the present invention provides a network system, including the UE as described in Embodiment 24 and the base station as described in Embodiment 25.

A particular operational flow is as described in embodiments 5-12, which shall not be described herein any further.

An embodiment of the present invention further provides a computer-readable program, wherein when the program is executed in an information acquiring apparatus or a base station, the program enables a computer to carry out the information acquiring method as described in embodiments 5-11 in the information acquiring apparatus or the base station.

An embodiment of the present invention further provides a storage medium in which a computer-readable program is stored, wherein the computer-readable program enables a computer to carry out the information acquiring method as described in embodiments 5-11 in an information acquiring apparatus or a base station.

An embodiment of the present invention further provides a computer-readable program, wherein when the program is executed in an information acquiring apparatus or UE, the program enables a computer to carry out the information acquiring method as described in embodiments 5-11 in the information acquiring apparatus or the UE.

An embodiment of the present invention further provides a storage medium in which a computer-readable program is stored, wherein the computer-readable program enables a computer to carry out the information acquiring method as described in embodiments 5-11 in an information acquiring apparatus or UE.

An embodiment of the present invention further provides a computer-readable program, wherein when the program is executed in a parameter optimizing apparatus or a base station, the program enables a computer to carry out the parameter optimizing method as described in Embodiment 12 in the parameter optimizing apparatus or the base station.

An embodiment of the present invention further provides a storage medium in which a computer-readable program is stored, wherein the computer-readable program enables a computer to carry out the parameter optimizing method as described in Embodiment 12 in a parameter optimizing apparatus or a base station.

An embodiment of the present invention further provides a computer-readable program, wherein when the program is executed in a parameter configuring apparatus or base station, the program enables a computer to carry out the parameter configuring method as described in embodiments 1-2 in the parameter configuring apparatus or the base station.

An embodiment of the present invention further provides a storage medium in which a computer-readable program is stored, wherein the computer-readable program enables a computer to carry out the parameter configuring method as described in embodiments 1-2 in a parameter configuring apparatus or a base station.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the principles of the present invention, and such variants and modifications fall within the scope of the present invention.

## Claims

1. A parameter configuring method, **characterized in that** the method comprises:
determining (101, 201) coverage ranges of cells by a base station or an OAM according to parameter ranges of configured more than one groups of parameter sets;
configuring (102, 202) cell types corresponding to the coverage ranges of cells by the base station or the OAM; wherein the cell types are denoted by the parameter, and
notifying, by the base station or the OAM, information on a changed cell type to a network side neighboring base station when the coverage ranges of cells change.

2. The method according to claim 1, wherein the method further comprises:
notifying (203) the configured cell types by the OAM to a base station.

3. A parameter configuring apparatus, **characterized in that** the apparatus comprises:
a first parameter configuring unit (301, 401) configured to determine coverage ranges of cells according to parameter ranges of configured more than one group of parameter sets;
a second parameter configuring unit (302, 402) configured to configure cell types corresponding to the coverage ranges of cells; wherein the cell types are denoted by the parameter; and
a second notifying unit (303) configured to notify information on a changed cell type to a network side neighboring base station when the coverage ranges of cells change.

4. The apparatus according to claim 3, wherein the apparatus is an OAM and further comprises:
a first notifying unit (403) configured to notify a base station of the configured cell types.

## Patentansprüche

1. Parameterkonfigurationsverfahren, **dadurch gekennzeichnet, dass** das Verfahren Folgendes umfasst:
Bestimmen (101, 201) von Abdeckungsbereichen von Zellen durch eine Basisstation oder eine OAM-Einheit gemäß Parameterbereichen von mehr als einer konfigurierten Gruppe von Parametersätzen;
Konfigurieren (102, 202) von Zelltypen entsprechend den Abdeckungsbereichen von Zellen durch die Basisstation oder die OAM-Einheit;
wobei die Zelltypen durch die Parameter gekennzeichnet sind, und
Mitteilen durch die Basisstation oder die OAM-Einheit von Informationen über einen geänderten Zelltyp an eine netzwerkseitige benachbarte Basisstation, wenn sich die Abdeckungsbereiche von Zellen ändern.

2. Verfahren nach Anspruch 1, wobei das Verfahren ferner Folgendes umfasst:
Mitteilen (203) der konfigurierten Zelltypen durch die OAM-Einheit an eine Basisstation.

3. Parameterkonfigurationsvorrichtung, **dadurch gekennzeichnet, dass** die Vorrichtung Folgendes umfasst:
eine erste Parameterkonfigurationseinheit (301, 401), die konfiguriert ist, um Abdeckungsbereiche von Zellen gemäß Parameterbereichen von mehr als einer konfigurierten Gruppe von Parametersätzen zu bestimmen;
eine zweite Parameterkonfigurationseinheit (302, 402), die konfiguriert ist, um Zelltypen entsprechend den Abdeckungsbereichen von Zellen zu konfigurieren; wobei die Zelltypen durch die Parameter gekennzeichnet sind; und
eine zweite Mitteilungseinheit (303), die konfiguriert ist, um Informationen über einen geänderten Zelltyp einer netzwerkseitigen benachbarten Basisstation mitzuteilen, wenn sich die Abdeckungsbereiche von Zellen ändern.

4. Vorrichtung nach Anspruch 3, wobei die Vorrichtung eine OAM-Einheit ist und ferner Folgendes umfasst:
eine erste Mitteilungseinheit (403), die konfiguriert ist, um einer Basisstation die konfigurierten Zelltypen mitzuteilen.

## Revendications

1. Procédé de configuration de paramètres, **caractérisé en ce que** le procédé comprend les étapes consistant à :
déterminer (101, 201) des plages de couverture de cellules par une station de base ou un module OAM en fonction de plages de paramètres de plusieurs groupes d'ensembles de paramètres configurés ;
configurer (102, 202) des types de cellules correspondant aux plages de couverture de cellules par la station de base ou l'OAM ; dans lequel les types de cellules sont désignés par le paramètre et notifient, par la station de base ou l'OAM, des informations sur un type de cellule modifié à une station de base voisine du côté réseau lorsque les plages de couverture des cellules changent.

2. Procédé selon la revendication 1, dans lequel le procédé comprend en outre l'étape consistant à :
notifier (203) les types de cellules configurés par l'OAM à une station de base.

3. Appareil de configuration de paramètres, **caractérisé en ce que** l'appareil comprend :
une première unité de configuration de paramètres (301, 401) configurée pour déterminer des plages de couverture de cellules en fonction de plages de paramètres de plusieurs groupes de paramètres configurés ;
une seconde unité de configuration de paramètres (302, 402) configurée pour configurer des types de cellules correspondant aux plages de couverture de cellules; dans lequel les types de cellules sont désignés par le paramètre ; et
une seconde unité de notification (303) configurée pour notifier des informations sur un type de cellule modifié à une station de base voisine côté réseau lorsque les plages de couverture des cellules changent.

4. Appareil selon la revendication 3, dans lequel l'appareil est un OAM et comprend en outre :
une première unité de notification (403) configurée pour notifier une station de base des types de cellules configurés.
